# EUROPEAN PATENT SPECIFICATION

(11) **EP 4 204 476 B1**
(45) Date of publication and mention of the grant of the patent: **25.11.2026**
(21) Application number: 21769129.4
(22) Date of filing: 27.08.2021
(51) Int. Cl.: C08G 63/86, C08G 63/80, C08G 63/88, B01J 23/14, C08G 63/181, C08G 63/672

(54) **PREPARING POLYESTER COMPRISING 2,5-FURANDICARBOXYLATE UNITS WITH GERMANIUM CATALYST**
VERFAHREN ZUR HERSTELLUNG VON POLYESTER MIT 2,5-FURANDICARBOXYLAT-EINHEITEN
PROCÉDÉ DE PRODUCTION DE POLYESTER COMPRENANT DES UNITÉS 2,5-FURANEDICARBOXYLATE

(30) Priority: 27.08.2020 EP 20193190
(43) Date of publication of application: 05.07.2023
(73) Proprietor: Furanix Technologies B.V., 1014 BV Amsterdam (NL)
(72) Inventor: DAM, Matheus Adrianus, 1014 BV AMSTERDAM (NL); WANG, Bing, 1014 BV AMSTERDAM (NL); ELFEKI, Hendawy, 1014 BV AMSTERDAM (NL)
(74) Representative: EP&C
(86) International application number: PCT/EP2021/073750
(87) International publication number: WO 2022/043501

(56) References cited:
- US-A1- 2018 355 101
- US-B2- 9 850 342
- CHEBBI YOSRA ET AL: "Solid-State Polymerization of Poly(Ethylene Furanoate) Biobased Polyester, III: Extended Study on Effect of Catalyst Type on Molecular Weight Increase", POLYMERS, vol. 11, no. 3, 6 March 2019 (2019-03-06), pages 438, XP055869336, DOI: 10.3390/polym11030438

## Description

The present invention relates to a process for preparing a polyester comprising 2,5-furandicarboxylate units and to polyesters comprising 2,5-furandicarboxylate units further comprising germanium.

2,5-Furandicarboxylic acid (FDCA) is known in the art to be a highly promising building block for replacing petroleum-based monomers in the production of high performance polymers. In recent years FDCA and the plant-based polyester polyethylenefuranoate (PEF) have attracted a lot of attention. PEF is a recyclable plastic with superior performance properties compared to today's widely used plastics. These materials could significantly reduce the dependence on petroleum-based polymers and plastics, while at the same time allowing for a more sustainable management of global resources. Comprehensive research was conducted to arrive at a technology for preparing FDCA and PEF in a commercially viable way.

FDCA is typically obtained by oxidation of molecules having furan moieties, e.g. 5-hydroxymethylfurfural (5-HMF) and the corresponding 5-HMF esters or 5-HMF ethers, that are typically obtained from plant-based sugars, e.g. by sugar dehydration. A broad variety of oxidation processes is known from the prior art using enzymes or metal containing catalysts such as described in WO2010/132740 and WO2011/043660.

While a lot of research was directed at the efficient production of FDCA monomer in the early days of the technology, researchers soon realized that arriving at efficient processes for preparing high-performance polyesters from FDCA was at least as challenging. FDCA is oftentimes considered a structural and functional analogue to terephthalic acid (TA) which is used in the production of the widely used polyester polyethylene terephthalate (PET). However, techniques known from the PET industry frequently were found not to be suitable to produce high-performance polyesters from FDCA. Processes for preparing polyesters from FDCA have been described in EP 3116932, EP 3116934, WO 2013/1209989 and US 2010/0174044.

Several of the above-mentioned difficulties seem to be due to the different chemical properties of the monomer FDCA. A significant difference manifests itself in the starting material used for preparing the respective polyesters. While PET is produced on an industrial scale from the free diacid (i.e. by esterification and polycondensation) as well as the dialkyl ester of TA (i.e. by transesterification and polycondensation), the present process uses FDCA, i.e. the free diacid, as starting material for esterification and subsequent polycondensation.

The polycondensation residence time is important in the preparation of polyester from FDCA. It was found that a long polycondensation residence time can affect the optical properties of the polyester. Furthermore, the residence time influences the throughput of the manufacturing process.

While it is possible to increase the temperature in PET manufacture to reduce the polycondensation time, this was found to easily lead to degradation and low quality resin in the manufacture of polyesters from FDCA.

Another way of reducing the reaction time in small scale operation is to increase the catalyst concentration. However, such increase often results in more side reactions. In addition, reactions are often diffusion limited in larger scale operations which makes that extra catalyst has no or only little effect on the residence time.

Chain extenders or crosslinkers also can be used to reduce polycondensation residence time for PET. However, this approach has the disadvantage that chain extenders or crosslinkers, even at low concentrations, can drastically affect the behaviour of the resin during melt processing.

In an experiment described by Yosra Chebbi et al: "Solid-State Polymerization of Poly(Ethylene Furanoate) Biobased Polyester, III: Extended Study on Effect of Catalyst Type on Molecular Weight Increase", Polymers, 2019, 11, 438, germanium containing catalyst was used in polymerization of 2,5-dimethylfurandicarboxylate and ethylene glycol in a molar ratio of diester/diol of 1/2. Of the various metal based catalysts, the germanium oxide catalyst was found to result in the highest activation energy and to lead to low molecular weight PEF.

The aim of US9850342 is to inhibit decomposition degradation of polyester under high temperature and high humidity due to thermal de composition and hydrolysis. Comparative Example 3 uses a germanium catalyst with 3.5 mol of ethylene glycol and 2.7 mol of a dicarboxylic acid mixture consisting for 85 % of terephthalic acid and 15 % of 2,5-furandicarboxylic acid. The polyester obtained had a reduced viscosity of 0.490 dl/g and a melting point of 249 °C.

US 2018/0355101 describes a process which allows to increase the amount of 1,4:3,6-dianhydrohexitol incorporated into thermoplastic polyester. The polycondensation with germanium catalyst lasted for 3 hours in Example 1 and 5 hours in Example 2.

WO2015/142181 and US 2017/0015781 include germanium in a long list of metals which may be used as basis for a polymerization catalyst.

An objective of the present invention was to prepare polyester comprising 2,5-furandicarboxylate units from furandicarboxylic acid at short residence time using germanium containing catalyst which has been observed to produce polyesters having good optical properties in combination with good number and weight average molecular weights. The good optical properties can be a low absorbance of 400 nm light and/or limited haze. Haze is a measure for the milkiness of a material and is to be measured according to ASTM D1003-21.

It is especially advantageous that solid state polymerization of the polyesters obtained was found to give polyesters having a very high number and weight average molecular weight while still having good optical properties such as low absorbance of 400 nm light and low haze.

A further objective was to provide a process for preparing a polyester comprising 2,5-furandicarboxylate units from furandicarboxylic acid with the help of a reduced amount of germanium containing catalyst. Furthermore, it can be an objective to be able to prepare polyester comprising 2,5-furandicarboxylate units which contain only a limited amount of germanium. Polyester containing a reduced amount of metal is attractive from a processing and from an environmental point of view. The polyesters in both cases preferably have a high molecular weight preferably in combination with good optical properties.

A further objective is to be able to prepare by solid state polymerization polyesters having a very high molecular weight while preferably additionally having the good optical properties.

Polyesters comprising 2,5-furandicarboxylate are considered promising for several packaging applications for which customers expect transparent materials. Therefore, an additional objective can be to prepare polyester having a low absorbance of 400 nm light preferably in combination with limited haze.

The present invention now relates to a process for preparing a polyester comprising 2,5-furandicarboxylate units, which process comprises: a) providing or preparing a starting composition comprising 2,5-furandicarboxylic acid and an aliphatic diol wherein the starting composition has a molar ratio of aliphatic diol to 2,5-furandicarboxylic acid of 1.01-1.80, b) subjecting the starting composition to esterification conditions to produce an ester composition, and c) contacting the ester composition with a germanium containing catalyst at polycondensation conditions to produce a polyester comprising 2,5-furandicarboxylate units and having a number average molecular weight of at least 30 kg/mol, wherein the catalyst is added as a germanium containing solution.

Surprisingly, it was found that such process allows to prepare polyester comprising 2,5-furandicarboxylate units having a high molecular weight either at relatively low polycondensation times or with a limited amount of germanium containing catalyst.

Therefore, the present invention further relates to polyester comprising 2,5-furandicarboxylate units comprising of from 5 to 120 ppm of germanium, calculated as weight amount of metal on polyester, and having a number average molecular weight of at least 30 kg/mol. The amount of germanium is in parts per million by weight (ppm) with respect to the theoretical maximum weight of the polymer obtainable from the respective starting composition. It is calculated by multiplying the mols of FDCA in the starting composition with the molecular weight of the corresponding theoretical polymer repeat unit (i.e. FDCA + aliphatic diol - 2*H2O).

Weight average molecular weight and number average molecular weights hereinafter are given as determined through the use of gel permeation chromatography (GPC) with hexafluorisopropanol with 0.05 M potassiumtrifluoroacetate as eluent and calibrated using polymethylmethacrylate standard. Full details are provided in the experiments.

Hereinafter, the subject-matter of the invention is discussed in more detail, wherein preferred embodiments of the invention are disclosed. It is particularly preferred to combine two or more preferred embodiments to obtain an especially preferred embodiment.

Each the process and the polyester according to the invention are described hereinafter. It is a preferred embodiment that the process produces the specific and/or preferred polyesters described below in more detail.

The amount of germanium is calculated as weight amount of metal independent of the actual form or state of the germanium.

Processes of preparing polyesters starting from diacids typically comprise at least two distinct steps, i.e. the esterification and the polycondensation, wherein some processes can also include additional intermediate steps like pre-polycondensation and/or subsequent processing steps like granulation, crystallization, drying and/or solid state polymerization of the obtained resin.

During esterification, diacids react with diols under esterification conditions thereby preparing a mixture that - depending on the concentration of the starting materials - comprises monomeric diesters and monoesters of the diacid with the diol, e.g. hydroxyalkyl esters, as well as water, residual free diacid and low molecular oligomers of these compounds.

The composition obtained in the esterification step is subsequently subjected to polycondensation conditions at elevated temperature and reduced pressure in order to obtain the final polyester.

Optionally, a pre-polycondensation step may be used between the esterification step b) and the polycondensation step c). The pre-polycondensation step is typically conducted at a pressure lower than applied in esterification and can be used to remove the most volatile components, such as free diol and other low molecular weight compounds, before reducing the pressure even further to begin the polycondensation process.

The starting composition for the present process can be produced or provided, e.g. bought from a separate supplier. The starting composition comprises 2,5-furandicarboxylic acid, i.e. free diacid. Processes that start from the dialkyl esters of FDCA are less prone to decarboxylation. Decarboxylation of FDCA yields 2-furancarboxylic acid which functions as a chain terminator in polycondensation and limits the maximum obtainable molecular weight of the polyester. Therefore, it is preferred to limit the concentration of 2-furancarboxylic acid in the starting composition. The starting composition preferably comprises 500 ppm or less of 2-furancarboxylic acid, preferably 400 ppm or less, more preferably 300 ppm or less, by weight with respect to the weight of the starting composition.

It is known in the art that diols, in particular aliphatic diols, can undergo ether formation with other diol molecules thereby preparing higher molecular weight diols with an ether functionality. A prominent example is the formation of diethylene glycol (DEG) from ethylene glycol (also referred to as mono ethylene glycol or MEG). These ether compounds can be incorporated into the final polyester and are known to have a detrimental effect on the physical-chemical properties of the resulting polyester. Suppressants can suppress ether formation between the diol compounds during the esterification step, wherein in TA/PET technology these compounds are oftentimes labelled DEG suppressants, indicating that they are directed at reducing the formation of DEG. The suppressant used to suppress ether formation will be referred to herein as a DEG suppressant, regardless of the actual ether being suppressed. Various DEG suppressants can be used in the present process. Well known DEG suppressants are ammonium compounds, in particular tetraethyl ammonium hydroxide, alkali phosphates, in particular sodium dihydrogen phosphate and disodium hydrogen phosphate as disclosed e.g. in WO 2015/137805. Suitable DEG suppressants were found to be ammonium compounds, in particular tetraethyl ammonium hydroxide.

Especially preferred DEG suppressants for use with germanium containing catalysts were found to be the group consisting of amines and lithium hydroxide.

Surprisingly, a specific class of DEG suppressants was found to also reduce decarboxylation. These DEG suppressants were found to be selected from the group consisting of primary amines, secondary amines, tertiary amines and lithium hydroxide, wherein 3-aminocrotonic acid ester with butanediol (ACAEBD), Et₂NEtOH and Me₂NDodec were identified as particular suitable amines.

To achieve the desired effect, suppressant is present during the esterification and will therefore be also comprised in the ester composition, either as the suppressant and/or its reaction products and/or its decomposition products. For some embodiments, it might be expedient to remove suppressant and/or its reaction products and/or its decomposition products after step b) but prior to polycondensation. However, suppressant and/or its reaction products and/or its decomposition products can be present during the polycondensation as well.

The starting composition prepared in step a) is subjected to esterification conditions to produce an ester composition. The esterification of a diol compound with an acid compound is a reaction that is well known to the skilled person and is typically conducted at elevated temperatures. Based on the molar ratio of the starting materials used in the starting composition, the chemical constitution of the ester composition can vary. However, for the molar ratios typically employed, the ester composition tends to comprise the mono ester of the diacid and the diol compound, the diester of the diacid and the diol, a minor amount of unreacted FDCA and low molecular oligomers of the respective compounds as well as potentially unreacted aliphatic diol compound.

Although the germanium containing solution is catalyst for use in the polycondenation of step c), it can be preferred to add the catalyst to the starting composition. This tends to be possible with a germanium polycondensation catalyst. Other polycondensation catalysts were found to deactivate if present during esterification. If the germanium containing solution is added to the starting composition, the solvent of the solution can influence the molar ratio of the FDCA to diol and/or the acidity of the starting composition. If the solvent is a diol, the diol can be incorporated into the polyester. It will be clear to the person skilled in the art how to make use of or counteract the effect of the solvent.

Various solvents have been found to be suitable. Preferred solvents are selected from the goup consisting of diols and water. These compounds have the additional advantage that they are already present in the reaction mixture and are easy to remove. It is preferred to use a limited amount of solvent while still obtaining a solution of germanium containing catalyst. The person skilled in the art will know what amount of solvent to use depending on the circumstances. Although not preferred, the solution can contain solid germanium besides dissolved germanium. Especially good results are obtained with aqueous solutions of germanium as polycondensation catalyst.

Many different germanium containing compounds are suitable for preparing the germanium containing solution. The person skilled in the art can easily assess which germanium compound preferably is used. The extent to which the germanium containing compound dissolves can depend not only on the anion or anions present but also on the specific crystal structure of the germanium containing compound. The germanium can be present as the metal or as the cation before being dissolved. The germanium containing compound which is dissolved preferably is selected from the group consisting of germanium oxide and germanium salts, preferably selected from the group of organic germanium salts and germanium oxide. In the present context, an organic germanium salt comprises a salt of a germanium cation and at least one kind of hydrocarbon anion. Most preferably, the germanium containing compound used for preparing the solution consists of germanium oxide.

Most preferably, the germanium containing solution is prepared by dissolving germanium oxide in water.

Both the esterification reaction and the polycondensation may be conducted in one or more steps and could suitably be operated as either batch, semi-continuous or continuous processes. It is preferred that the esterification process is conducted until the esterification reaction has progressed to the point where 80 % or more, preferably 85 % or more, most preferably 90 % or more, of the acid groups have been converted to ester moieties before the polycondensation is started.

The polycondensation is used for preparing a polyester comprising 2,5-furandicarboxylate units by forming additional ester moieties between the compounds of the ester composition by means of esterification and transesterification, wherein e.g. water and/or aliphatic diol are released in the condensation process, and are typically removed from the reaction due to the elevated temperatures and reduced pressures used during polycondensation.

Preferred is a process according to the invention, wherein the aliphatic diol comprises 2 to 8 carbon atoms, preferably 2 to 6 carbon atoms, wherein the aliphatic diol preferably solely has carbon atoms in the main chain. Preferably, the aliphatic diol comprises no C-O-C connectivity. Most preferably, the aliphatic diol is ethylene glycol.

Relatively short and mostly linear diols are thought to exhibit a particular strong tendency for ether formation under conditions typically employed for esterification. Some aliphatic diols themselves already contain an ether group, i.e. a C-O-C connectivity in the main chain. For example, DEG is a diol with an internal ether group. While such compounds are sometimes used in the prior art intentionally, the use of respective diols was typically found to give polyesters having less favourable physical-chemical properties. While reducing the formation of even longer oligomers, e.g. by ether formation between two diethylene glycol molecule, will still be beneficial, it is naturally most preferred to avoid the respective diols with ether functionality all together.

Furthermore, alkylene glycols are typically readily available in large amounts while at the same time easy to handle and to process. At the same time, the resulting polyesters haven proven to exhibit excellent mechanical properties, in particular if ethylene glycol and/or or butylene glycol is used.

Therefore, a process according to the invention is preferred, wherein the polyester comprising 2,5-furandicarboxylate units is a polyalkylenefuranoate, preferably selected from the group consisting of poly(ethylene 2,5-furandicarboxylate), poly(propylene 2,5-furandicarboxylate), poly(butylene 2,5-furandicarboxylate), poly(pentylene 2,5-furandicarboxylate) and copolymers thereof, more preferably from the group consisting of poly(ethylene 2,5-furandicarboxylate) and poly(butylene 2,5-furandicarboxylate), most preferably is poly(ethylene 2,5-furandicarboxylate).

Despite the above described advantages of aliphatic diols without internal ether groups, it can be expedient for certain applications to use diols that have an ether moiety. This is particular true for hetero alicyclic compounds, wherein for example isosorbide is known to result in polyesters with promising properties for specific and use applications.

In view of this, a process according to the invention is preferred, wherein the aliphatic diol is selected from the group consisting of acyclic diols and alicyclic diols, preferably selected from the group consisting of alkylene glycols and alicyclic diols, more preferably from the group consisting of alkylene glycols, cyclohexanedimethanol and isosorbide, most preferably alkylene glycols, particularly preferred ethylene glycol.

The molar ratio of the aliphatic diol to the FDCA can influence the molecular weight obtainable, and also the velocity of the increase of molecular weight during a subsequent solid state polymerisation.

According to the process accoridng to the invention the molar ratio of the aliphatic diol to 2,5-furandicarboxylic acid of the starting composition is in the range of 1.01 to 1.80, preferably 1.05 to 1.70, more preferably 1.07 to 1.60, most preferably 1.10 to 1.30. Preferably, the ester composition comprises 2,5-furandicarboxylic acid mono-hydroxyalkyl ester of 2,5-furandicarboxylic acid and dihydroxyalkyl ester of 2,5-furandicarboxylic acid, wherein the total ratio of hydroxyl end groups measured by ¹H-NMR to carboxylic acid end groups measured by titration is in the range of 1.01 to 4.6, preferably 1.05 to 2.00, more preferably 1.07 to 1.80, most preferably 1.10 to 1.30, wherein the amount of hydroxyl end groups measured by ¹H-NMR is preferably in the range of 300 to 2400 eq/t, more preferably 500 to 2000 eq/t, most preferably in the range of 600 to 1800 eq/t, and wherein the amount of carboxylic end groups measured by titration is preferably in the range of 300 to 1200 eq/t, more preferably 500 to 1000 eq/t, most preferably in the range of 600 to 900 eq/t. Preferably, 2,5-furandicarboxylic acid and aliphatic diols constitute 90 % or more, preferably 95 % or more, most preferably 98 % or more, of the starting composition that is subjected to esterification by weight with respect to the weight of the starting composition.

It was found the esterification of the present process preferably is conducted at a temperature in the range of 180 to 260 °C, preferably 185 to 240 °C, more preferably 190 to 230 °C. The polycondensation preferably is conducted at a temperature in the range of 240 to 300 °C, preferably 260 to 290 °C, more preferably 265 to 285 °C. Preferably, the esterification is conducted at a pressure in the range of 40 to 400 kPa, preferably 50 to 150 kPa, more preferably 60 to 110 kPa. Preferably, the polycondensation is conducted at reduced pressure in the range of 0.05 to 100 kPa, preferably 0.05 to 10 kPa, more preferably 0.1 to 1 kPa.

The above described preferred process parameters are in particular applicable to those processes, wherein the 2,5-furandicarboxylic acid and the aliphatic diol constitute 90 % or more, preferably 95 % or more, most preferably 98 % or more of the starting composition by weight.

While the actual reaction time depends on the employed starting materials and their amounts, the esterification is typically conducted for a time t in the range of 30 to 480 min, preferably 60 to 360 min, more preferably 120 to 300 min, most preferably 180 to 240 min. The polycondensation is typically conducted for a time t in the range of 10 to 260 min, preferably 30 to 190 min. The polycondensation preferably is conducted for at least 40 minutes, more preferably at least 60 min, more preferably at least 80 min, more preferably at least 90 min. The polycondensation preferably is conducted for at most 180 min, more preferably at most 150 min, more preferably at most 120 min. The polycondensation time is the time during which the ester composition is subjected in the presence of a germanium compound to a temperature of at least 240 °C, more preferably at least 250 °C, more preferably at least 260 °C.

The concentration of germanium in step c), calculated as the metal per se, preferably is in the range of 10 to 1000 ppm, preferably 30 to 500 ppm, more preferably 50 to 300 ppm. Preferably, the amount of germanium is at most 250 ppm, more preferably at most 150 ppm, more preferably at most 120 ppm, more preferably at most 100 ppm. All these amounts are with respect to the theoretical maximum weight of the polymer obtainable from the respective starting composition. Preferably, the amount of the germanium in step c) is in the range of 0.005 to 0.1 %, preferably 0.005 to 0.05 %, more preferably 0.01 to 0.04 %, by weight with respect to the weight of 2,5-furandicarboxylic acid in the starting composition. Preferably, the molar ratio of the germanium to FDCA in the starting composition is in the range of 0.0001 to 0.01, preferably 0.0002 to 0.001.

The concentration of suppressant in the starting composition preferably is in the range of 5 to 1300 ppm, preferably 20 to 700 ppm, more preferably 30 to 450 ppm, by weight with respect of the weight of the starting composition.

Although other polycondensation catalysts can be used or added, the exclusive use of germanium containing solution as polycondensation catalyst is preferred. Therefore, a process according to the invention is preferred, wherein the polycondensation catalyst consists of germanium containing solvent. Therefore, the absence of other catalytic metal compounds is preferred. Preferably, the concentration of antimony compounds in the ester composition during polycondensation is in the range of 0 to 50 ppm, preferably 0 to 20 ppm, more preferably less than 5 ppm by weight with respect of the weight of the ester composition.

The combined concentration of ammonium compounds and sodium in the starting composition preferably is in the range of 0 to 50 ppm, preferably 0 to 20 ppm, more preferably less than 5 ppm by weight with respect of the weight of the starting composition.

Preferably, the polyester of the invention has an A_400 light absorbance of 0.020 or less determined as a 30 mg/mL solution of polyester in a dichloromethane:hexafluoroisopropanol 8:2 (vol/vol) mixture in a 2.5 cm diameter vial measured at 400 nm. This absorbance preferably is at most 0.019, more preferably at most 0.017, more preferably at most 0.015. The data measured for the 2.5 cm diameter vial can be converted to a customary 1 cm equivalent path length by dividing the measured data by 2.5.

It is preferred that the polyester of the invention has at most 7 eq/t, preferably less than 7 eq/t, i.e. 7 equivalents per metric ton, corresponding to mol/t, of decarboxylated end groups measured by ¹H-NMR using TCE-d2 as a solvent, more preferably at most 6 eq/t.

The skilled person is well aware of a number of suitable methods for determining the end groups in polyesters, including titration, infrared and proton-nuclear magnetic resonance (¹H-NMR) methods. In many cases, separate methods are used to quantify the four main end groups, i.e. carboxylic acid end groups, hydroxyl end groups, ester end groups and the end groups that are obtained after decarboxylation. A.T Jackson and D.F. Robertson have published an1 H-NMR method for end group determination in PET in "Molecular Characterization and Analysis of Polymers" (J.M. Chalmers en R.J. Meier (eds.), Vol. 53 of "Comprehensive Analytical Chemistry", by B. Barcelo (ed.), (2008) Elsevier, on pages 183- 193. A similar method can be carried out for polyesters that comprise 2,5-furandicarboxylate units. Herein, the measurement of the end groups can be performed at room temperature without an undue risk of precipitation of the polyester from the solution. This1 H-NMR method using deuterated 1 ,1 ,2,2-tetrachloroethane (TCE-d2) is very suitable to determine the amount of decarboxylated end groups (DEC) and can also be used to determine the content of ethers of aliphatic diol incorporated in the polyester. Peak assignments are set using the TCE peak at a chemical shift of 6.04 ppm. The furan peak at a chemical shift of 7.28 ppm is integrated and the integral is set at 2.000 representing the two protons on the furan ring. The decarboxylated end groups are found at a chemical shift of 7.64 - 7.67 ppm, representing one proton. The content of DEG is determined from the integral of the respective shift of the protons adjacent to the ether functionality, e.g. shifts at 3.82 to 3.92 ppm for DEG, representing four protons. The amount of hydroxyl end groups (HEG) is determined from the two methylene protons of the hydroxyl end group at 4.0 ppm. In the framework of the present invention, the above described methods are used to determine DEC, the content of DEG and other ethers as well as HEG, while the amount of carboxylic acid end groups (CEG) is determined using titration as disclosed in the experimental section below. The shifts for DEG are exemplary for the use of monoethylene glycol as diol.

Corresponding shifts can be readily determined for other ethers produced from other diols by one skilled in the art. The shifts mentioned for decarboxylation are relatively insensitive to the choice of diol, as is the acid titration method for determining CEG.

The polyester comprising 2,5-furandicarboxylate units after polycondensation has a number average molecular weight of at least 30 kg/mol or more, more preferably 32 kg/mol or more. Preferably, the polyester has a weight average molecular weight after polycondensation of 40 kg/mol or more, preferably 45 kg/mol or more, more preferably 60 kg/mol or more.

While the polyester obtained after polycondensation can be used directly for specific applications, it is in some cases beneficial to add further processing steps. These steps can comprise a step of crystallizing the polyester for obtaining a crystallized polyester and subjecting the crystallized polyester to a solid-state polymerization for increasing the molecular weight. Therefore, it can be preferred that the process further comprises the steps: d) crystallizing the polyester comprising 2,5-furandicarboxylate units obtained in step c) to obtain a crystallized or semi-crystallized polyester comprising 2,5-furandicarboxylate units, and e) subjecting the crystallized polyester comprising 2,5-furandicarboxylate units produced in step d) to a solid state polymerization for increasing the molecular weight.

Both steps are known to the skilled person and the skilled person is typically able to adjust the process parameters of these steps according to its needs. However, the inventors identified specific process parameters that were found to be particularly beneficial for the process of the present invention in particular if germanium is still present in the crystallized polyester as will typically be the case.

Insofar, a process according to the invention is preferred, wherein the solid state polymerization is conducted at an elevated temperature in the range of Tm - 80 °C to Tm - 20 °C, preferably Tm - 60 °C to Tm - 25 °C, more preferably Tm - 60 °C to Tm - 30 °C, wherein Tm is the melting point of the polyester comprising 2,5-furandicarboxylate units in °C, wherein the solid state polymerization is preferably conducted at an elevated temperature in the range of 160 to 240 °C, more preferably 170 to 220 °C, most preferably 180 to 210 °C. The crystallization preferably is conducted at an elevated temperature in the range of 100 to 200 °C, preferably 120 to 180 °C, more preferably 140 to 160 °C. The crystallization preferably is conducted for a time t in the range of 0.5 to 48 h, preferably 1 to 6 h, wherein step d) is conducted directly after step c) without cooling the polyester comprising 2,5-furandicarboxylate units below 50 °C. The crystallization preferably is conducted at or near ambient pressure or, less preferred, at reduced pressure of less than 100 kPa or less than 10 kPa. The solid state polymerization preferably is conducted under inert gas atmosphere, preferably nitrogen, helium, neon or argon atmosphere.

It is preferred that the crystallized or semi-crystallized polyester obtained in step d) is granulated to obtain a degree of granulation in the range of 20 to 180 pellets per g, preferably 40 to 140 pellets per g.

The optimal time for the crystallization can be chosen based on the crystallization enthalpy dHcryst of the polyester. When the polyester obtained in step c) is heated to yield a semi-crystallized or crystallized polyester, the amount of decarboxylated end groups does not alter. However, the crystallinity changes significantly. This may be determined by means of Differential Scanning Calorimetry (DSC). The crystallinity is often measured as the enthalpy for melting the semi-crystalline polymer when heating at a suitable rate. The crystallinity is expressed in the unit J/g, and is taken as the net enthalpy of the melting peak (endotherm) after correcting for any crystallization (exotherm) which occurs on the upheat. A process according to the invention is preferred, wherein the crystallization is conducted for a time t so that the net enthalpy dHcryst of the polyester comprising 2,5-furandicarboxylate is larger than 20 J/g, preferably larger than 25 J/g, more preferably larger than 30 J/g as measured via DSC using a heating rate of 10 dC/min.

Solid-state polymerization can lead to a significant increase in the number average and weight average molecular weight of the obtained polyester.

It has been found that the optical properties can be enhanced if not only the solid-state polymerization is conducted in an atmosphere with reduced oxygen concentration, preferably under an inert gas atmosphere, but also the crystallization step itself. An atmosphere with reduced oxygen concentration means a reduction compared to air at ambient pressure, preferably an oxygen partial pressure of less than 1 kPa, more preferably less than 0.1 kPa, most preferably less than 0.01 kPa, even more preferably less than 0.001 kPa.

It is preferred to conduct crystallization of the present process in an atmosphere with reduced oxygen concentration, preferably under inert gas atmosphere, preferably nitrogen, helium, neon or argon atmosphere, most preferably nitrogen atmosphere. It was found possible to produce polyester comprising 2,5-furandicarboxylate units after solid state polymerization having an A_400 light absorbance measured as described above of 0.06 or less, preferably 0.04 or less, more preferably 0.02 or less.

It was surprisingly found that the rate of molecular weight increase during solid-state polymerization can be significantly increased if lithium hydroxide is used as a suppressant. Polyesters with very high molecular weights can be obtained in very short time period of solid-state polymerization. This allows to significantly increase the output of a process.

It has become possible to prepare polyester comprising 2,5-furandicarboxylate units having a number average molecular weight of 30 kg/mol or more, preferably 45 kg/mol or more, more preferably 50 kg/mol or more. The polyester comprising 2,5-furandicarboxylate units can have a weight average molecular weight of 90 kg/mol or more, preferably 100 kg/mol or more, more preferably 120 kg/mol or more. It is especially advantageous that this can be achieved while the polyester comprises at most 250 ppm of germanium, calculated as metal on amount of polyester, more preferably at most 200 ppm of germanium, more preferably at most 150 ppm of germanium, more preferably at most 120 ppm of germanium, more preferably at most 100 ppm of germanium, more preferably at most 90 ppm of germanium. Concentrations are given with respect to the theoretical maximum weight of the polymer obtainable from the respective starting composition.

It was further found that the process allows the addition of typical stabilizers that are known from the prior art. Therefore, the process starting composition can further comprise a stabilizer. Stabilizers include phosphorous containing compounds, in particular phosphite containing compounds, phosphate containing compounds and phosphonate containing compounds, preferably phosphoric acid, and hindered phenolic compounds.

The weight average molecular weight and the number average molecular weight are to be determined as disclosed in the experimental section below.

The use of an inert gas atmosphere during crystallization of polyesters comprising 2,5-furandicarboxylate units according to the invention and/or prepared according to the invention was surprisingly found to enhance its optical properties such as a reduction of the light absorbance at 400 nm.

The polyester of the invention preferably has a number average molecular weight of 30 kg/mol or more, preferably 45 kg/mol or more, more preferably 50 kg/mol or more. The polyester of the invention preferably has a weight average molecular weight of 90 kg/mol or more, preferably 100 kg/mol or more, more preferably 120 kg/mol or more. The polyester of the invention preferably contains at most 100 ppm of germanium, more preferably at most 90 ppm of germanium, calculated as weight amount of metal on polyester. The polyester of the invention preferably has a A_400 light absorbance measured as described above in a 2.5 cm diameter vial, of 0.06 or less, preferably 0.04 or less, more preferably 0.02 or less, more preferably 0.015 or less.

The invention will be further illustrated by means of the following examples.

### Experiments

### Abbreviations and Measurements:

DEC denotes the equivalents of decarboxylated end groups per metric ton of the obtained polymer in eq/t, DEG indicates the amount of diethylene glycol incorporated in the polyester in weight percent with respect to the weight of the polyester. Herein, the values for the decarboxylated end groups (DEC), the amount of hydroxyl end groups (HEG) and the amount of diethylene glycol (DEG) in the polyester, were obtained by ¹H-NMR as described above using TCE-d2 as a solvent.

In a typical experiment about 10 mg of a polyester was weighed and put in an 8 ml glass vial. To the vial 0.7 ml of TCE-d2 was added and the polyester was dissolved at room temperature whilst agitating the mixture in the vial. The dissolved mixture was analyzed using ¹H-NMR, whilst the peak for TCE-d2 was set to 6.04 ppm.

A_400 is the absorbance of a 30 mg/mL solution of polyester in a dichloromethane:hexafluoroisopropanol 8:2 (vol/vol) mixture in a 2.5 cm diameter circular vial measured at 400 nm. The data measured for the 2.5 cm diameter vial can be converted to a customary 1 cm equivalent path length by dividing the measured data by 2.5.

The amount of carboxylic end groups (CEG) in eq/t was measured by titration based on ASTM D7409, i.e. by titration of a solution of 0.4 to 1.2 g of the polymer sample dissolved in 50 mL of o-cresol with 0.01 M solution of potassium hydroxide in ethanol to its equivalence point using bromocresol green as indicator.

The weight average molecular weight and the number average molecular weight are determined through the use of gel permeation chromatography (GPC). GPC measurement was performed at 35 °C using two PSS PFG linear M (7 µm, 8x300 mm) columns with precolumn. Hexafluorisopropanol with 0.05 M potassiumtrifluoroacetate was used as eluent. Flow rate was set to 1.0 mL/min, injection volume was 50 µL and the run time was 50 min. The calibration is performed using polymethylmethacrylate standards.

### Examples 1-4

A starting composition comprising ethylene glycol and 2,5-furandicarboxylic acid in combination with 210 ppm tetraethylammonium hydroxide DEG suppressant (TEAOH on total amount of reaction mixture) and 15 ppm H₃PO₄ (weight amount of phosphorus on total amount of reaction mixture) was subjected to esterification at 220 °C and at atmospheric pressure. After esterification, polycondensation catalyst was added as 200 ppm of GeO₂ (calculated as amount of Ge metal). In Examples 1 and 2, the catalyst was added as a solution of 200 ppm of GeO₂ in 75 ml water. In Comparative Examples 3 and 4, the catalyst was added as solid. Subsequently, the ester composition was subjected to pre-polycondensation at a temperature of 260 °C during 45 minutes and to polycondensation at this temperature of 260 °C for as long as required to obtain the desired molecular weight. Reactor torque and speed are used to monitor the molecular weight increase. The rounds per minute of the agitator motor is decreased in small steps each time the measured torque reaches a predetermined value. Further process conditions are listed in Table 1 and the results obtained for the polymer after polycondensation are listed in Table 2.

**Table 1**

| | H₂O (ml) | Molar ratio | Catalyst conc. (ppm metal) | Catalyst | Polycondensation time (min) |
|---|---|---|---|---|---|
| Example 1 | 75 | 1.19 | 200 | GeO₂ solution | 100 |
| Example 2 | 75 | 1.21 | 200 | GeO₂ solution | 107 |
| Example 3 | 0 | 1.19 | 200 | GeO₂ solid | 166 |
| Example 4 | 0 | 1.19 | 200 | GeO₂ solid | 164 |

**Table 2**

| | DEC (eq/t) | CEG (eq/t) | HEG (eq/t) | DEG (wt%) | A_400 (a.u.) | Mₙ (kg/mol) | M_{w} (kg/mol) |
|---|---|---|---|---|---|---|---|
| Example 1 | 6 | 66 | 44 | 2.3 | 0.013 | 32.5 | 74.7 |
| Example 2 | 5 | 47 | 59 | 2.4 | 0.014 | 33.8 | 76.5 |
| Example 3 | 5 | 52 | 80 | 2.4 | 0.014 | 28.0 | 60.6 |
| Example 4 | 7 | 51 | 75 | 2.4 | 0.011 | 27.2 | 56.8 |

The experimental data presented above show that a germanium containing solution allows to prepare polyester comprising 2,5-furandicarboxylate units having a high number and weight average molecular weight and good optical properties at reduced polycondensation times.

### Example 5

The polyester as obtained in Example 4 was subjected to solid state polymerization at 200 ° during 72 hours in the form of whole pellets. After solid state polymerization, the polyester obtained had an A_400 of 0.019, a number average molecular weight of 52.3 kg/mol and a weight average molecular weight of 127.3 kg/mol.

### Example 6

A starting composition comprising ethylene glycol and 2,5-furandicarboxylic acid in combination with 210 ppm TEAOH and 15 ppm H₃PO₄ (weight amount on total amount of reaction mixture) was subjected to esterification at 220 °C and at atmospheric pressure. After esterification, a solution of 75 ppm of GeO₂ in 28.1 ml water was added as polycondensation catalyst. Subsequently, the ester composition was subjected to pre-polycondensation at a temperature of 260 °C during 45 minutes and to polycondensation at a temperature of 270 °C for as long as required to obtain the desired molecular weight. Further process conditions are listed in Table 3 and the results obtained for the polymer after polycondensation are listed in Table 4.

**Table 3**

| | H₂O (ml) | Molar ratio | Catalyst conc. (ppm metal) | Catalyst | Polycondensation time (min) |
|---|---|---|---|---|---|
| Example 6 | 28.1 | 1.21 | 75 | GeO₂ solution | 133 |

**Table 4**

| | DEC (eq/t) | CEG (eq/t) | HEG (eq/t) | DEG (wt%) | A_400 (a.u.) | Mₙ (kg/mol) | M_{w} (kg/mol) |
|---|---|---|---|---|---|---|---|
| Example 6 | 5 | 50 | 51 | 2.4 | 0.013 | 33.4 | 76.6 |

The above experimental data show that the present process can prepare polyester comprising 2,5-furandicarboxylate units containing at most 100 ppm of germanium which polyester has a high number and weight average molecular weight and good optical properties.

## Claims

1. Process for preparing a polyester comprising 2,5-furandicarboxylate units, which process comprises: a) providing or preparing a starting composition comprising 2,5-furandicarboxylic acid and an aliphatic diol wherein the starting composition has a molar ratio of aliphatic diol to 2,5-furandicarboxylic acid of 1.01-1.80, b) subjecting the starting composition to esterification conditions to produce an ester composition, and c) contacting the ester composition with a germanium containing catalyst at polycondensation conditions to produce a polyester comprising 2,5-furandicarboxylate units having a number average molecular weight of at least 30 kg/mol (measured by GPC as disclosed in the description) wherein the catalyst is added as a germanium containing solution.

2. Process according to claim 1, wherein the germanium containing solution is an aqueous solution.

3. Process according to claim 1 or 2, wherein the germanium containing solution is added to the starting composition.

4. Process according to any one of claims 1 to 3, wherein in step c) the amount of germanium is at most 250 ppm calculated as metal and with respect to the theoretical maximum weight of the polymer obtainable from the respective starting composition.

5. Process according to any one of claims 1 to 4, wherein the ester composition is subjected to polycondensation conditions comprising a temperature in the range of 240 to 300 °C during of from 30 to 190 minutes.

6. Process according to any one of claims 1 to 5, wherein the starting composition further comprises of from 20 to 700 ppm, with respect to weight of the starting composition, of ammonium compounds for suppressing ether formation between the aliphatic diol molecules.

7. Process according to any one of claims 1 to 6, further comprising the steps: d) crystallizing the polyester comprising 2,5-furandicarboxylate units obtained in step c) to obtain a crystallized polyester comprising 2,5-furandicarboxylate units, and e) subjecting the crystallized polyester comprising 2,5-furandicarboxylate units produced in step d) to a solid state polymerization for increasing the molecular weight.

8. Process according to claim 7, wherein the solid state polymerization is conducted at an elevated temperature in the range of Tm - 80 °C to Tm - 20 °C, wherein Tm is the melting point of the polyester comprising 2,5-furandicarboxylate units in °C.

9. Process according to any one of claims 7 or 8, wherein the crystallization is conducted under inert gas atmosphere, preferably nitrogen, helium, neon or argon atmosphere.

10. Polyester comprising 2,5-furandicarboxylate units comprising of from 5 to 120 ppm of germanium, calculated as weight amount of metal on polyester, and having a number average molecular weight of at least 30 kg/mol (measured by GPC as disclosed in the description).

11. Polyester according to claim 10, wherein the polyester comprising 2,5- furandicarboxylate units further has an amount of equivalents of decarboxylated end groups per metric ton of the obtained polymer of at most 6 eq/t measured by 1 H-NMR using TCE-d2 as a solvent.

12. Polyester according to claim 10 or 11, having a light absorbance of 0.020 or less determined as a 30 mg/mL solution of polyester in a dichloromethane: hexafluoroisopropanol 8:2 (vol/vol) mixture in a 2.5 cm diameter vial measured at 400 nm.

## Patentansprüche

1. Verfahren zum Herstellen eines Polyesters, der 2,5-Furandicarboxylat-Einheiten umfasst, wobei das Verfahren Folgendes umfasst: a) Bereitstellen oder Herstellen einer Ausgangszusammensetzung, die 2,5-Furandicarbonsäure und ein aliphatisches Diol umfasst, wobei die Ausgangszusammensetzung ein Molverhältnis von aliphatischem Diol zu 2,5-Furandicarbonsäure von 1,01-1,80 aufweist, b) Aussetzen der Ausgangszusammensetzung gegenüber Veresterungsbedingungen, um eine Esterzusammensetzung herzustellen, und c) Inkontaktbringen der Esterzusammensetzung mit einem Germanium enthaltenden Katalysator bei Polykondensationsbedingungen, um einen Polyester, der 2,5-Furandicarboxylat-Einheiten umfasst, mit einem zahlenmittleren Molekulargewicht von mindestens 30 kg/mol (gemessen mittels GPC gemäß den Angaben in der Beschreibung) herzustellen,
wobei der Katalysator als Germanium enthaltende Lösung zugegeben wird.

2. Verfahren nach Anspruch 1, wobei es sich bei der Germanium enthaltenden Lösung um eine wässrige Lösung handelt.

3. Verfahren nach Anspruch 1 oder 2, wobei die Germanium enthaltende Lösung zu der Ausgangszusammensetzung gegeben wird.

4. Verfahren nach einem der Ansprüche 1 bis 3, wobei in Schritt c) die Germaniummenge höchstens 250 ppm, berechnet als Metall und bezogen auf das theoretische Maximalgewicht des aus der jeweiligen Ausgangszusammensetzung erhältlichen Polymers, beträgt.

5. Verfahren nach einem der Ansprüche 1 bis 4, wobei die Esterzusammensetzung Polykondensationsbedingungen unterworfen wird, die eine Temperatur im Bereich von 240 bis 300 °C während 30 bis 190 Minuten umfassen.

6. Verfahren nach einem der Ansprüche 1 bis 5, wobei die Ausgangszusammensetzung ferner von 20 bis 700 ppm, bezogen auf das Gewicht der Ausgangszusammensetzung, Ammoniumverbindungen zur Unterdrückung der Etherbildung zwischen den aliphatischen Diolmolekülen umfasst.

7. Verfahren nach einem der Ansprüche 1 bis 6, ferner umfassend die Schritte: d) Kristallisieren des in Schritt c) erhaltenen Polyesters, der 2,5-Furandicarboxylat-Einheiten umfasst, um einen kristallisierten Polyester, der 2,5-Furandicarboxylat-Einheiten umfasst, zu erhalten, und e) Aussetzen des in Schritt d) hergestellten kristallisierten Polyesters, der 2,5-Furandicarboxylat-Einheiten umfasst, gegenüber einer Festkörperpolymerisation zum Erhöhen des Molekulargewichts.

8. Verfahren nach Anspruch 7, wobei die Festkörperpolymerisation bei einer erhöhten Temperatur im Bereich von Tm - 80 °C bis Tm - 20 °C durchgeführt wird, wobei Tm der Schmelzpunkt des Polyesters, der 2,5-Furandicarboxylat-Einheiten umfasst, in °C ist.

9. Verfahren nach einem der Ansprüche 7 oder 8, wobei die Kristallisation unter Inertgasatmosphäre, vorzugsweise Stickstoff-, Helium-, Neon- oder Argonatmosphäre, durchgeführt wird.

10. Polyester, umfassend 2,5-Furandicarboxylat-Einheiten, umfassend 5 bis 120 ppm Germanium, berechnet als Gewichtsmenge Metall auf Polyester, mit einem zahlenmittleren Molekulargewicht von mindestens 30 kg/mol (gemessen mittels GPC gemäß den Angaben in der Beschreibung).

11. Polyester nach Anspruch 10, wobei der Polyester, der 2,5-Furandicarboxylat-Einheiten umfasst, ferner eine Menge von Äquivalenten von decarboxylierten Endgruppen pro metrischer Tonne des erhaltenen Polymers von höchstens 6 Äq./t, gemessen durch 1H-NMR unter Verwendung von TCE-d2 als Lösungsmittel, aufweist.

12. Polyester nach Anspruch 10 oder 11 mit einer Lichtabsorption von 0,020 oder weniger, bestimmt als 30 mg/ml Lösung von Polyester in einer Mischung von Dichlormethan:Hexafluorisopropanol im Volumenverhältnis von 8:2 in einem Fläschchen mit einem Durchmesser von 2,5 cm, gemessen bei 400 nm.

## Revendications

1. Procédé de préparation d'un polyester comprenant des motifs 2,5-furanedicarboxylate, lequel procédé comprend : a) la fourniture ou la préparation d'une composition de départ comprenant de l'acide 2,5-furanedicarboxylique et un diol aliphatique, la composition de départ ayant un rapport molaire diol aliphatique sur acide 2,5-furanedicarboxylique de 1,01 à 1,80, b) la soumission de la composition de départ à des conditions d'estérification pour produire une composition d'ester, et c) la mise en contact de la composition d'ester avec un catalyseur contenant du germanium dans des conditions de polycondensation pour produire un polyester comprenant des motifs 2,5-furanedicarboxylate ayant un poids moléculaire moyen en nombre d'au moins 30 kg/mole (mesuré par GPC comme divulgué dans la description),
dans lequel le catalyseur est ajouté sous la forme d'une solution contenant du germanium.

2. Procédé selon la revendication 1, dans lequel la solution contenant du germanium est une solution aqueuse.

3. Procédé selon la revendication 1 ou 2, dans lequel la solution contenant du germanium est ajoutée à la composition de départ.

4. Procédé selon l'une quelconque des revendications 1 à 3, dans lequel, dans l'étape c), la quantité de germanium est d'au plus 250 ppm calculée en tant que métal et par rapport au poids maximal théorique du polymère pouvant être obtenu à partir de la composition de départ respective.

5. Procédé selon l'une quelconque des revendications 1 à 4, dans lequel la composition d'ester est soumise à des conditions de polycondensation comprenant une température dans la plage de 240 à 300 °C pendant une période de 30 à 190 minutes.

6. Procédé selon l'une quelconque des revendications 1 à 5, dans lequel la composition de départ comprend en outre de 20 à 700 ppm, par rapport au poids de la composition de départ, de composés d'ammonium pour supprimer la formation d'éther entre les molécules de diol aliphatique.

7. Procédé selon l'une quelconque des revendications 1 à 6, comprenant en outre les étapes : d) cristallisation du polyester comprenant des motifs 2,5-furanedicarboxylate obtenu à l'étape c) pour obtenir un polyester cristallisé comprenant des motifs 2,5-furanedicarboxylate, et e) soumission du polyester cristallisé comprenant des motifs 2,5-furanedicarboxylate produit à l'étape d) à une polymérisation à l'état solide pour augmenter le poids moléculaire.

8. Procédé selon la revendication 7, dans lequel la polymérisation à l'état solide est effectuée à une température élevée dans la plage de Tm - 80 °C à Tm - 20 °C, Tm étant le point de fusion du polyester comprenant des motifs 2,5-furanedicarboxylate en °C.

9. Procédé selon l'une quelconque des revendications 7 ou 8, dans lequel la cristallisation est réalisée sous atmosphère de gaz inerte, de préférence sous atmosphère d'azote, d'hélium, de néon ou d'argon.

10. Polyester comprenant des motifs 2,5-furanedicarboxylate comprenant de 5 à 120 ppm de germanium, calculée en quantité pondérale de métal sur polyester, et présentant un poids moléculaire moyen en nombre d'au moins 30 kg/mole (mesuré par GPC comme divulgué dans la description).

11. Polyester selon la revendication 10, dans lequel le polyester comprenant des motifs 2,5-furanedicarboxylate a en outre une quantité d'équivalents de groupes terminaux décarboxylés par tonne métrique du polymère obtenu d'au plus 6 éq/t mesurée par RMN ¹H en utilisant TCE-d2 comme solvant.

12. Polyester selon la revendication 10 ou 11, ayant une absorbance de lumière de 0,020 ou moins déterminée sous la forme d'une solution à 30 mg/ml de polyester dans un mélange dichlorométhane-hexafluoroisopropanol 8:2 (vol/vol) dans une fiole de 2,5 cm de diamètre mesurée à 400 nm.
